# EUROPÄISCHE PATENTSCHRIFT

(11) **EP 3 433 044 B1**
(45) Veröffentlichungstag und Bekanntmachung des Hinweises auf die Patenterteilung: **18.11.2020**
(21) Anmeldenummer: 17736877.6
(22) Anmeldetag: 27.06.2017
(51) Int. Cl.: B23G 5/06, B23G 5/20, B23D 13/00

(54) **VERFAHREN UND WERKZEUG ZUR ERZEUGUNG EINER GEWINDEBOHRUNG**
METHOD AND MACHINE FOR THE MACHINING OF A THREADED HOLE
PROCÉDÉ ET MACHINE POUR L'USINAGE D'UN TARAUDAGE

(30) Priorität: 13.07.2016 DE 102016008477
(43) Veröffentlichungstag der Anmeldung: 30.01.2019
(73) Patentinhaber: AUDI AG, 85045 Ingolstadt (DE)
(72) Erfinder: KOPTON, Peter, 85092 Kösching (DE)
(86) Internationale Anmeldenummer: PCT/EP2017/000753
(87) Internationale Veröffentlichungsnummer: WO 2018/010831

(56) Entgegenhaltungen:
- DE-A1-102009 038 173
- DE-A1-102012 110 986
- DE-A1-102014 112 162
- DE-U- 1 818 609
- JP-A- 2006 082 199
- US-A- 194 469
- US-A- 5 733 078
- US-A- 5 733 078

## Beschreibung

Die Erfindung betrifft ein Verfahren zur Erzeugung einer Gewindebohrung, insbesondere Gewindesackloch, nach dem Oberbegriff des Patentanspruches 1 sowie ein Gewindebohr-Werkzeug zur Durchführung eines solchen Verfahrens nach dem Patentanspruch 15. Ein solches Verfahren und ein solches Gewindebohr-Werkzeug sind aus dem Dokument DE 10 2014 112 162 A1 bekannt.

Üblicherweise wird beim Gewindebohren in einem ersten Prozessschritt mittels eines Bohrers eine Kernlochbohrung im Werkstück erzeugt. Anschließend wird in einem zweiten Prozessschritt mittels eines separaten Gewindebohrers ein Innengewinde in die Kernlochbohrung eingeschnitten. Je nach Größe weist der Gewindebohrer zwei oder mehrere Schneiden auf. Die Schneiden haben Zähne, die von der Innenwandung der Kernlochbohrung je einen Materialspan abtragen und gegebenenfalls das Material im geringen Maße plastisch verformen. Die Zähne des Gewindebohrers sind verschieden ausgebildet, zum Beispiel verschieden stark abgeflacht. Dadurch nimmt beim Schneiden jeder Zahn in etwa gleich große Materialspäne mit.

In Abkehr zum obigen Gewindebohr-Prozess erfolgt das gattungsgemäße Verfahren mit einem Einschuss-Gewindebohr-Werkzeug, bei dem die Kernlochbohrung und das Innengewinde-Schneiden in einem gemeinsamen Werkzeughub durchgeführt werden. Das Einschuss-Gewindebohr-Werkzeug weist an seiner Bohrerspitze eine Hauptschneide und ein in einer Gewindebohr-Richtung nacheilendes Gewindeprofil mit zumindest einem Gewinde-Schneidzahn auf. In dem Verfahren erfolgt ein Gewindebohr-Hub und anschließend ein gegenläufiger Reversier-Hub. Im Gewindebohr-Hub erzeugt einerseits die Hauptschneide die Kernlochbohrung und andererseits das Gewindeprofil das Innengewinde an der Innenwandung der Kernlochbohrung bis zum Erreichen einer nutzbaren Soll-Gewindetiefe. Der Gewindebohr-Hub wird bei einem Gewindebohr-Vorschub mit dazu synchronisierter Drehzahl des Gewindebohr-Werkzeugs durchgeführt. In einem nachfolgenden gegenläufigen Reversier-Hub wird das Gewindebohr-Werkzeug in einer Reversier-Richtung aus der Gewindebohrung herausgeführt, und zwar mit entgegengesetztem Reversier-Vorschub und damit synchronisierter Reversier-Drehzahl. Dadurch wird gewährleistet, dass das Gewindeprofil des Gewindebohr-Werkzeugs im Gewindegang des Innengewindes belastungsfrei bewegt wird.

Im obigen Verfahren wird zum Ende des Gewindebohr-Hubes der Gewindebohr-Prozess verlangsamt, das heißt der Gewindebohr-Vorschub mit damit synchronisierter Gewindebohr-Drehzahl bis auf 0 reduziert. Diese Verzögerung des Gewindeschneid-Prozesses bis auf eine Gewindebohr-Drehzahl von Null führt jedoch im Stand der Technik zu einer übermäßig großen Schneidbelastung des Gewindeprofils, die zu einem Ausbruch der Schneidzähne oder zu einem Werkzeugbruch führen kann.

Aus der DE 38 80 394 T2 ist ein kombiniertes Werkzeug zum Bohren eines Loches und zum Gewindeschneiden bekannt. Mit dem Gewindebohr-Werkzeug wird zunächst eine Kernlochbohrung erzeugt. Anschließend wird das Gewindebohr-Werkzeug mit seiner Werkzeugachse in einer Kreisbahn um die Bohrungsachse bewegt, und zwar unter Rotation des Gewindebohr-Werkzeuges, wodurch das Gewindeprofil ein Innengewinde in der Kernlochbohrung erzeugt. Im Wesentlichen dasselbe Verfahren ist auch aus der DE 39 39 795 T2 und aus der US 5 678 962 bekannt.

Die Aufgabe der Erfindung besteht darin, ein Verfahren zur Erzeugung einer Gewindebohrung in einem Werkstück sowie ein Gewindebohr-Werkzeug zur Durchführung des Verfahrens bereitzustellen, bei dem die Werkzeug-Belastung reduziert ist.

Die Aufgabe ist durch die Merkmale des Patentanspruches 1 oder 17 gelöst. Bevorzugte Weiterbildungen der Erfindung sind in den Unteransprüchen offenbart.

Gemäß dem kennzeichnenden Teil des Patentanspruches 1 weist das Gewindeprofil zumindest eine Räumschneide auf, mit der die folgende Prozessführung ermöglicht wird: So wird bei der Durchführung des Reversier-Hubs mittels der Räumschneide eine Räumnut in der Gewindebohrung erzeugt, durch die der Gewinde-Schneidzahn belastungsfrei aus der Gewindebohrung herausgeführt wird. Die Räumnut durchquert den Gewindegang des Innengewindes, wobei der radial äußere Nutboden der Räumnut radial außerhalb eines radial äußeren Gewindegrunds des Innengewindes liegt. Bei der Durchführung des Reversier-Hubs ist die Drehzahl des Gewindebohr-Werkzeugs bevorzugt bei 0. Alternativ dazu kann das Gewindebohr-Werkzeugs auch mit einer Reversier-Drehzahl angetrieben werden.

Um die mechanische Belastung des Gewinde-Bohrwerkzeugs zu reduzieren, ist es erfindungsgemäß wenn nach dem Gewindebohr-Hub nicht unmittelbar der Reversier-Hub, sondern vielmehr zunächst ein Nutformschritt folgt. Im Nutformschritt wird eine an das Innengewinde anschließende Umlaufnut gebildet, die keine Gewindesteigung aufweist. In der Umlaufnut kann das Gewindeprofil des Gewindebohr-Werkzeuges belastungsfrei drehen. Auf diese Weise kann die Gewindebohr-Drehzahl bis auf 0 reduziert werden, ohne dass es aufgrund von übermäßig großer Schneidenbelastung zu einem Werkzeugbruch oder zu einem Ausbrechen des Gewindeprofils kommt.

Wie oben erwähnt, kann das Gewindeprofil des Gewindebohr-Werkzeugs in der im Nutformschritt erzeugten Umlaufnut ohne Gewindesteigung belastungsfrei drehen. Durch die Bereitstellung der Umlaufnut wird es außerdem ermöglicht, dass das Gewindebohr-Werkzeug mit einer Schneidkante eine umlaufende Gewindesenkung in der Bohrungsöffnung der Bohrung erzeugt. Die umlaufende Gewindesenkung kann also während des obigen Nutformschrittes erzeugt werden.

Das Gewindebohr-Werkzeug ist in einer ersten Ausführungsform als ein Vorbearbeitungswerkzeug einsetzbar. In diesem Fall muss die vorbearbeitete Gewindebohrung in einem Nachbearbeitungsschritt mit Hilfe eines Fertigbearbeitungswerkzeugs nachbearbeitet werden. Als Fertigbearbeitungswerkzeug ist ein Gewindeformer, ein Helikalgewindeformer oder ein Axialgewindeformer einsetzbar.

Alternativ dazu kann in einer zweiten Ausführungsform das Gewindebohr-Werkzeug selbst als ein Fertigbearbeitungswerkzeug ausgebildet sein. In diesem Fall kann der oben erwähnte zusätzliche Nachbearbeitungsschritt wegfallen.

In einer technischen Umsetzung kann der Gewindebohr-Hub in der Gewindebohr-Richtung unmittelbar mit einem Nutform-Hub verlängert werden. In diesem Fall wird das Gewindebohr-Werkzeug über die Soll-Gewindetiefe hinaus bis zum Erreichen einer Soll-Bohrungstiefe bewegt, und zwar mit einem Nutform-Vorschub sowie einer Nutform-Drehzahl, die zueinander nicht synchronisiert sind und/oder unterschiedlich zum Gewindebohr-Vorschub und zur Gewindebohr-Drehzahl sind.

Bevorzugt ist es, wenn am Ende des Nutformschrittes das Gewindeprofil vollständig in der Umlaufnut der Gewindebohrung belastungsfrei drehen kann. Die Umlaufnut wird während des Nutform-Hubes mit Hilfe der Hauptschneide sowie des Gewinde-Schneidzahns (oder allgemeiner Gewindezahn) des Gewindeprofils am Gewindebohr-Werkzeug erzeugt.

Bei Erreichen der Soll-Bohrungstiefe wird der Nutform-Vorschub auf 0 reduziert. Gleichzeitig wird auch die Nutform-Drehzahl auf 0 reduziert, um den erfindungsgemäßen Reversier-Hub zu ermöglichen.

Beim Start des Reversier-Hubes wird das Gewindebohr-Werkzeug so angesteuert, dass der Gewinde-Schneidzahn belastungsfrei in den Räumnut-Auslauf eingefahren werden kann, der in die Umlaufnut einmündet. Anschließend wird das Gewindebohr-Werkzeug in einer zur Gewindebohr-Richtung gegenläufigen Reversier-Richtung aus der Gewindebohrung herausgeführt, und zwar mit einem Reversier-Vorschub sowie ggf. einer Reversier-Drehzahl, wodurch der Gewinde-Schneidzahn ohne Materialabtrag aus der Gewindebohrung herausgeführt werden kann.

Während der Durchführung des Gewindebohr-Hubes, des Nutform-Hubes und des Reversier-Hubes bleiben bevorzugt die Kernbohrungs-Längsachse und die Rotationsachse des Gewindebohr-Werkzeuges durchgängig koaxial zueinander ausgerichtet.

Ein Gewindebohr-Werkzeug zur Durchführung eines solchen Verfahrens kann bevorzugt einen Spannschaft und einen daran anschließenden Gewindebohr-Körper aufweisen. Entlang dessen Längsachse kann zumindest eine Spannut bis zu einer stirnseitigen Hauptschneide an der Bohrerspitze erstrecken. An der stirnseitigen Hauptschneide laufen eine die Spannut begrenzende Spanfläche und eine stirnseitige Freifläche der Bohrerspitze zusammen. In der Werkzeug-Umfangrichtung betrachtet kann die Spannut durch zumindest einen Bohrersteg begrenzt sein. Die Spanfläche der Spannut kann unter Bildung einer Nebenschneide in eine außenumfangsseitige Rückenfläche des Bohrerstegs übergehen. An der außenumfangsseitigen Rückenfläche des Bohrersteges kann das Gewindeprofil mit zumindest einem Gewinde-Schneidzahn und einer zugeordneten Räumschneide ausgebildet sein. Die Zahnhöhe des Gewinde-Schneidzahns ist in der Radialrichtung so bemessen, dass der Gewinde-Schneidzahn die Hauptschneide in der Radialrichtung nach außen um einen Radialversatz überragt. Gegebenenfalls kann der Gewinde-Schneidzahn in der Radialrichtung nach außen flächenbündig die Hauptschneide verlängern. Alternativ und/oder zusätzlich kann der Gewinde-Schneidzahn in der Axialrichtung betrachtet um einen Axialversatz hinter der Hauptschneide angeordnet sein. Zusätzlich weist das Gewindeprofil die zumindest eine Räumschneide auf.

Der Gewindeprofil-Schneidzahn ist mit einer radial äußeren Profilgrund-Schneidkante ausgebildet, die die Haupt-Schneidenecke radial nach außen um eine Schneidzahn-Höhe überragt. Entsprechend weist auch die Gewindeprofil-Räumschneide eine radial äußere Nutboden-Schneidkante auf, die die Haupt-Schneidenecke radial nach außen um eine Räumschneiden-Höhe überragt. Die radial äußere Nutboden-Schneidkante der Gewindeprofil-Räumschneide geht an seitlichen Nutflanken-Schneidkanten in die Bohrersteg-Rückenfläche über. Die Nutboden-Schneidkante der Räumschneide und die Profilgrund-Schneidkante des Gewindeprofil-Schneidzahns sind dabei in etwa rechtwinklig zueinander ausgerichtet.

In einer bevorzugten Ausführungsvariante kann das Gewindebohr-Werkzeug vier Bohrerstege aufweisen, Jeder dieser Bohrerstege ist zumindest mit einem Gewinde-Schneidzahn ausgebildet, die umfangsverteilt am Bohrer ausgebildet sind. Die Gewinde-Schneidzähne sind bevorzugt nicht mit gleicher Schneiden-Geometrie ausgebildet, sondern vielmehr unterschiedlich ausgeführt. Beispielhaft können in der Bohrer-Umfangsrichtung hintereinander ein Vorschneidzahn, zwei Mittelschneidzähne und ein Fertigbearbeitungszahn unterschiedlicher Schneidengeometrie am Bohrer ausgebildet sein. Die Schneidzähne sind in der Axialrichtung zueinander versetzt am Gewindebohr-Werkzeug ausgebildet. Deren Versatzmaße sind so mit der Gewindebohr-Drehzahl und mit dem Gewindebohr-Vorschub abgestimmt, dass ein einwandfreies Gewindeschneiden gewährleistet ist.

In der obigen Ausführungsvariante ist jedem der insgesamt vier umfangsverteilten Gewinde-Schneidzähne jeweils zumindest eine Räumschneide zugeordnet. Die Räumschneiden müssen keine identische Schneidegeometrie aufweisen. Vielmehr richtet sich die Schneidengeometrie der jeweiligen Räumschneide jeweils nach der Schneidengeometrie des in Axialrichtung vorgelagerten Gewinde-Schneidzahns. Bei unterschiedlich dimensionierten Gewinde-Schneidzähnen können daher die Räumschneiden unterschiedliche Schneidegeometrien aufweisen. Entsprechend müssen auch die im Innengewinde erzeugten Räumnuten nicht identisch sein, sondern können diese unterschiedlich dimensioniert sein.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Figur 1a: in einer Seitenschnittdarstellung ein in einem Werkstück ausgebildetes Gewindesackloch;
- Fig. 1b: eine Ansicht von oben auf das Gewindesackloch;
- Figur 2: in einer Ansicht von vorne ein Gewindebohr-Werkzeug;
- Figur 3: eine Seitenansicht des Gewindebohr-Werkzeugs;
- Figuren 4 bis 7: jeweils Ansichten, die Verfahrensschritte zur Erzeugung des in der Figur 1 gezeigten Gewindesackloches veranschaulichen; und
- Figur 8 und 9: jeweils Ansichten entsprechend der Figur 1a weiterer Ausführungsbeispiele.

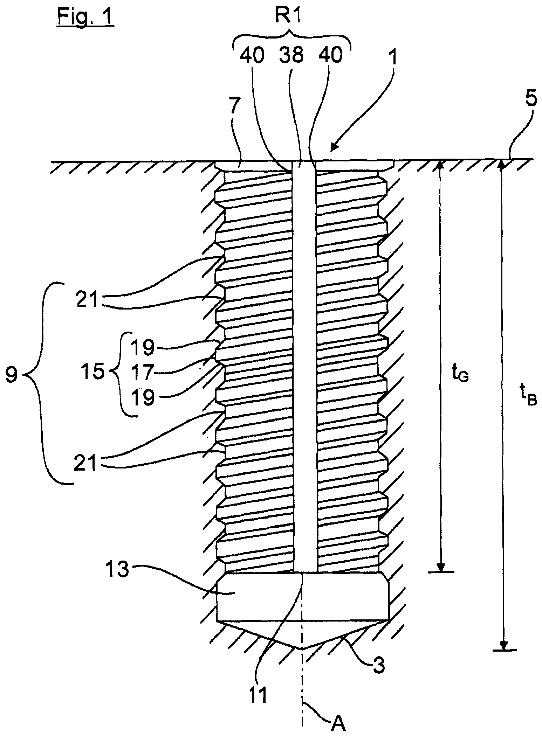

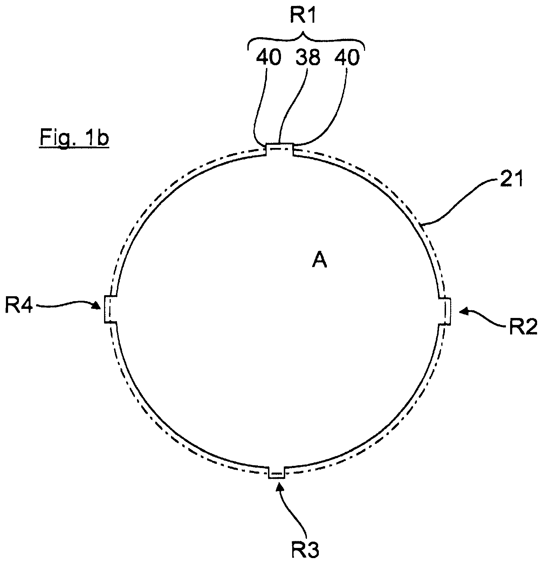

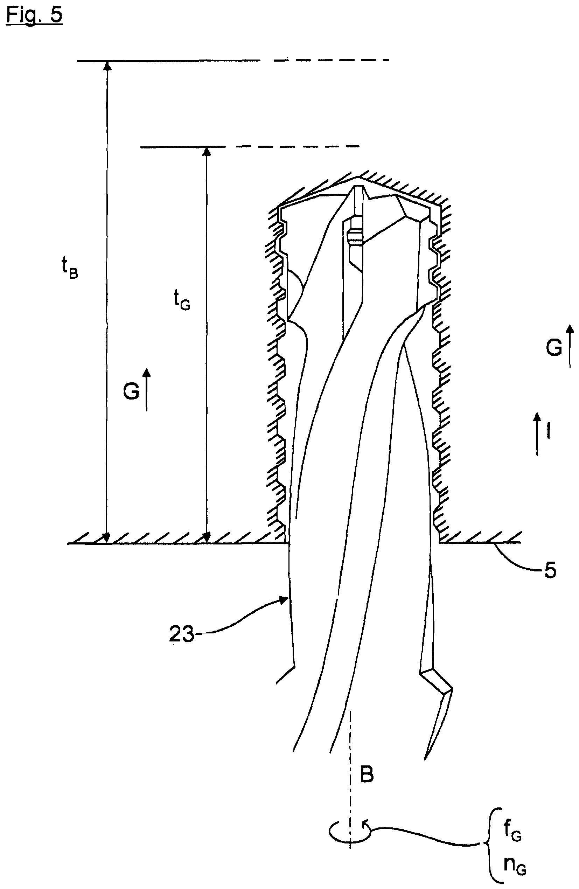

In der Figur 1a und 1b ist eine fertiggestellte Gewindesackloch-Bohrung 1 gezeigt. Die Bohrung 1 ist mit ihrem Bohrungsgrund 3 bis zu einer Soll-Bohrtiefe t_{B} in ein Werkstück 5 mittels einer sogenannten Einschuss-Bohrbearbeitung eingearbeitet, die später anhand der Figuren 5 bis 8 erläutert wird. Die Bohrung 1 weist an ihrer Bohrungsöffnung eine umlaufende Gewindesenkung 7 auf, die im weiteren Verlauf nach unten in ein Innengewinde 9 übergeht. Das Innengewinde 9 erstreckt sich entlang der Bohrungsachse A bis zu einer nutzbaren Soll-Gewindetiefe t_{G}. Wie aus der Figur 1 weiter hervorgeht, mündet ein Gewindegang 15 des Innengewindes 9 in einer Umlaufnut 13. Diese weist keine Gewindesteigung auf und ist, in der Axialrichtung betrachtet, zwischen dem Innengewinde 9 und dem Bohrungsgrund 3 ausgebildet. Der Gewindegang 15 weist einen radial äußeren Gewindegrund 17 sowie seitliche Gewindeflanken 19 auf, die radial innen in einen Gewinde-Innenscheitel 21 übergehen.

Zudem weist die Gewindesackloch-Bohrung 1 insgesamt vier in der Umfangsrichtung gleichmäßig verteilte Räumnuten R1 bis R4 auf, die mit einem Räumnut-Auslauf 11 (Fig. 1a) in die Umlaufnut 13 einmünden und die in der Axialrichtung den Gewindegang 15 des Innengewindes 9 durchqueren. Der radial äußere Nutboden 38 der jeweiligen Räumnut R1 bis R4 ist in der Fig. 1b radial außerhalb des radial äußeren Gewindegrunds 17 des Innengewindes 9 angeordnet. Die Räumnuten R1 bis R4 werden während der später beschriebenen Erzeugung des Innengewindes 9 mit Hilfe von Räumschneiden 41, 42, 43, 44 des Gewindebohr-Werkzeugs 23 gebildet, d.h. bei der Durchführung eines Reversier-Hubs R.

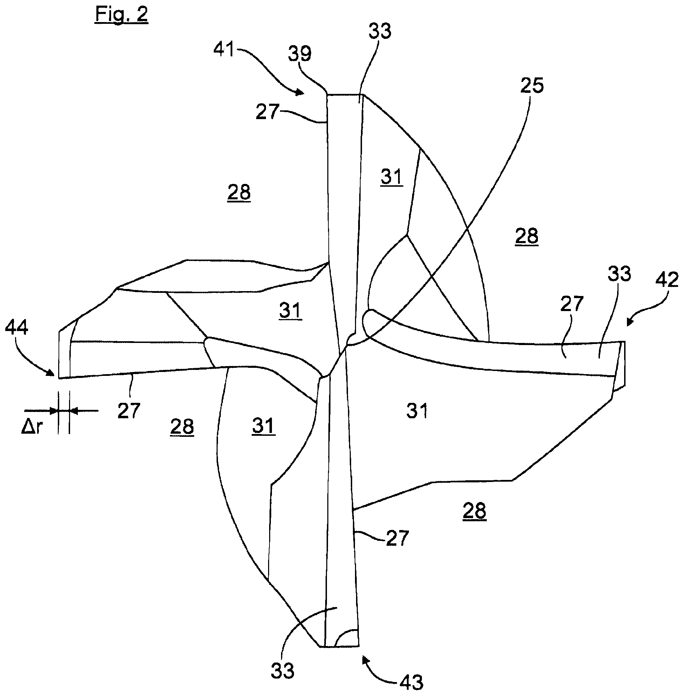

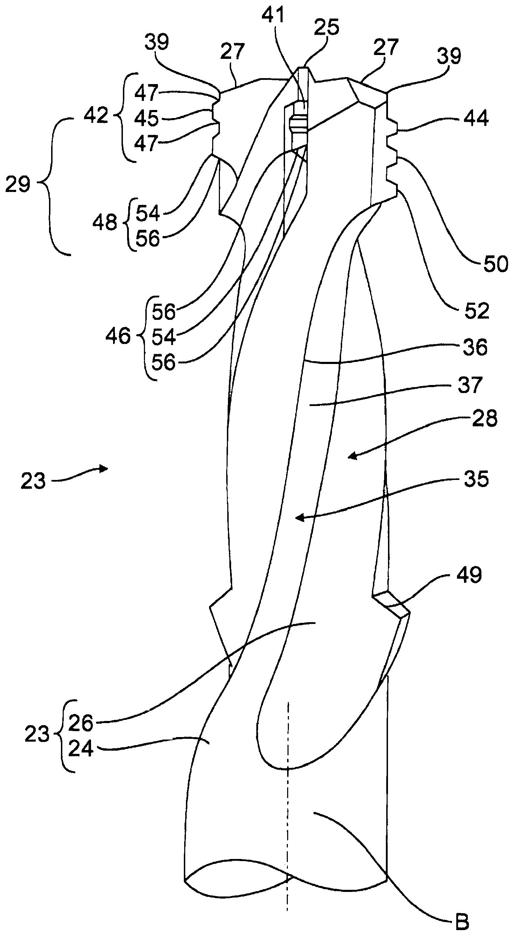

Die in der Figur 1a und 1b gezeigte Gewindesackloch-Bohrung 1 wird mit Hilfe des nachfolgend anhand der Figuren 2 und 3 beschriebenen Gewindebohr-Werkzeugs 23 durchgeführt. Demzufolge weist das Werkzeug 23 in der Figur 3 an seiner Bohrerspitze 25 vier gleichmäßig umfangsverteilte, stirnseitige Hauptschneiden 27 sowie ein in der Gewindebohr-Richtung I (Figur 5) nacheilendes Gewindeprofil 29 auf.

Das Werkzeug 23 ist mit einem Spannschaft 24 sowie einem daran anschließenden Gewindebohr-Körper 26 aufgebaut, entlang dessen Bohrungsachse A sich insgesamt vier umfangsseitig verteilte Spannuten 28 bis zu der jeweiligen stirnseitigen Hauptschneide 27 an der Bohrerspitze 25 erstrecken.

An jeder Hauptschneide 27 läuft eine die Spannut 28 begrenzende Spanfläche 31 und eine stirnseitige Freifläche 33 der Bohrerspitze 25 zusammen. In der Werkzeug-Umfangsrichtung ist die jeweilige Spannut 28 durch einen Bohrersteg 35 begrenzt. Insgesamt weist das in den Figuren 2 und 3 gezeigte Gewindebohr-Werkzeug 23 vier Bohrerstege 35 auf. Die Spanfläche 31 der Spannut 28 geht dabei unter Bildung einer Nebenschneide 36 in eine außenumfangsseitige Rückenfläche 37 des jeweiligen Bohrerstegs 35 über. Die Nebenschneide 36 und die stirnseitige Hauptschneide 27 laufen an einer radial äußeren Haupt-Schneidenecke 39 zusammen.

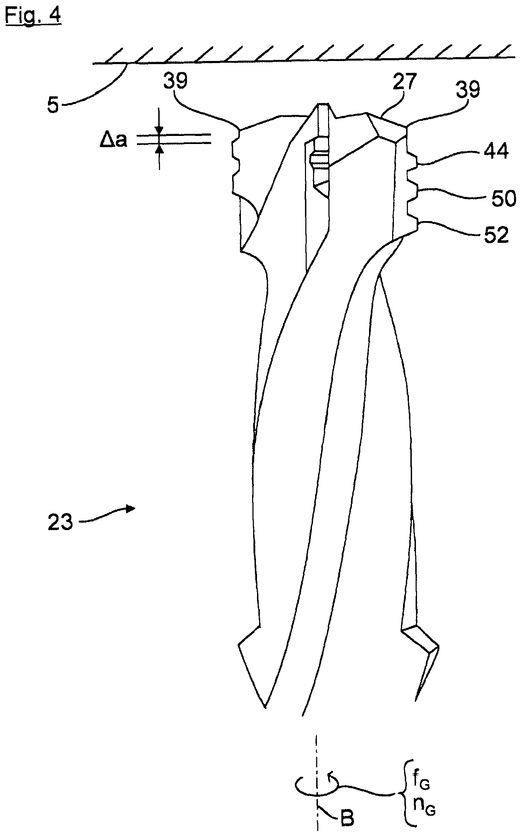

An den außenumfangsseitigen Rückenflächen 37 der vier Bohrerstege 35 weist das Gewindeprofil 29 jeweils einen Vorschneidzahn 41, einen ersten und einen zweiten Mittelschneidzahn 42, 43 und einen Fertigschneidzahn 44 auf. Jeder der Schneidzähne 41, 42, 43, 44 ist in der Figur 3 mit einer radial äußeren Gewindegrund-Schneidkante 45 sowie Gewindeflanken-Schneidkanten 47 ausgebildet, um den anhand der Figur 1a gezeigten Gewindegang 15 zu schneiden/zu formen. Die Schneidzähne 41 bis 44 sind dabei in unterschiedlichen Geometrien ausgeführt sowie mit unterschiedlichen Axialabständen Δa (nur in der Figur 4 angedeutet) von der Bohrerspitze 25 beabstandet, um den in der Figur 1 gezeigten Gewindegang 15 des Innengewindes 9 zu schneiden. Beispielhaft können die Vor-, Mittel- und Fertigschneidzähne 41, 42, 43, 44 in der Axialrichtung unterschiedliche Axialmaße aufweisen und/oder in der Radialrichtung unterschiedliche Schneidzahn-Höhen Δr (Fig. 2) aufweisen. Exemplarisch können die Vor-, Mittel- und Fertigschneidzähne 41, 42, 43, 44 in der Umfangsrichtung axial größer werden. Der Fertigschneidzahn 44 schneidet dann die gesamte Innengewinde-Kontur. Alternativ dazu kann der Fertigschneidzahn 44 auch als ein Formzahn ausgeführt sein, um ohne weitere Spanbearbeitung die Gewindefestigkeit zu steigern.

Das Gewindebohr-Werkzeug 23 weist zudem am Übergang zwischen dem Gewindebohr-Körper 26 und dem Spannschaft 24 eine Schneidkante 49 zur Bildung der in der Figur 1 gezeigten Gewindesenkung 7 auf.

In den Figuren ist den vier umfangsverteilten Gewinde-Schneidzähnen 41, 42, 43, 44 jeweils zumindest eine Räumschneide 46, 48, 50, 52 zugeordnet. Die Schneidengeometrie der Räumschneiden 46, 48, 50, 52 richtet sich jeweils nach der Schneidengeometrie des in der Axialrichtung vorgelagerten Gewinde-Schneidzahns 41, 42, 43, 44. D.h. dass bei den unterschiedlich dimensionierten Gewinde-Schneidzähnen 41, 42, 43, 44 auch die Räumschneiden 46, 48, 50, 52 unterschiedliche Schneidengeometrien aufweisen. Zudem sind dem in der Fig. 4 rechtsseitig gezeigten Gewinde-Schneidzahn 44 nicht nur eine Räumschneide, sondern insgesamt zwei in der Axialrichtung hintereinander angeordnete Räumschneiden 50, 52 zugeordnet. Dadurch wird die Werkzeug-Belastung während des im Reversier-Hub H erfolgenden Materialabtrags reduziert. Aufgrund der unterschiedlichen Schneidengeometrien der Räumschneiden 46, 48, 50, 52 sind die in der Fig. 1b gezeigten Räumnuten R1 bis R4 im Innengewinde 9 unterschiedlich dimensioniert.

Wie aus der Figur 3 hervorgeht, weist jede der Gewindeprofil-Räumschneide R1 bis R4 eine radial äußere Nutboden-Schneidkante 54 auf, die die Haupt-Schneidenecke 39 radial nach außen um eine Räumschneiden-Höhe überragt. Die Nutboden-Schneidkante 54 geht in seitliche Nutflanken-Schneidkanten 56 über. Die Nutboden-Schneidkante 54 erstreckt sich in der Bohrer-Umfangsrichtung und ist rechtwinklig zur Profilgrund-Schneidkante 45 des jeweiligen Gewindeprofil-Schneidzahns 41, 42, 43, 44 ausgerichtet,. Die Profilgrund-Schneidkante 45 erstreckt sich entlang der Bohrer-Längsachse B.

In der Bohrer-Längsachse B betrachtet überdeckt die Außenkontur der Gewindeprofil-Räumschneide 46, 48, 50, 52 die Außenkontur des jeweiligen Gewindeprofil-Schneidzahns 41, 42, 43, 44 vollständig, so dass die Gewindeprofil-Schneidzähne während des Reversier-Hubs H belastungsfrei durch die Räumnuten R1 bis R4 aus der Gewindebohrung herausgeführt werden.

Nachfolgend wird anhand der Figuren 5 bis 8 das Verfahren zur Erzeugung der in der Figur 1 gezeigten Gewindesackloch-Bohrung 1 beschrieben: Demzufolge wird in der Figur 1 das Gewindebohr-Werkzeug 23 in einer Gewindebohr-Richtung I auf das noch nicht vorgebohrte Werkzeug 5 geführt und eine Einschuss-Bohrung durchgeführt. Die Einschußbohrung ist in einen Gewindebohr-Hub G, in einen Nutform-Hub N und in einen Reversier-Hub R aufgeteilt. Im Gewindebohr-Hub G erzeugen die Hauptschneiden 27 eine Kernlochbohrung und gleichzeitig das nacheilende Gewindeprofil 29 das Innengewinde 9 an der Innenwandung der Kernlochbohrung. Der Gewindebohr-Hub G erfolgt bei einem Gewindebohr-Vorschub f_{G} und bei damit synchronisierter Gewindebohr-Drehzahl n_{G} in einer Gewindebohr-Drehrichtung, und zwar bis die Soll-Gewindetiefe t_{G} erreicht ist. Die Räumschneiden 46, 48, 50, 52 sind so dimensioniert, dass sie im Gewindebohr-Hub G weitgehend belastungsfrei durch den mittels der Gewinde-Schneidzähne 41, 42, 43, 44 gebildeten Gewindegang 15 führbar sind.

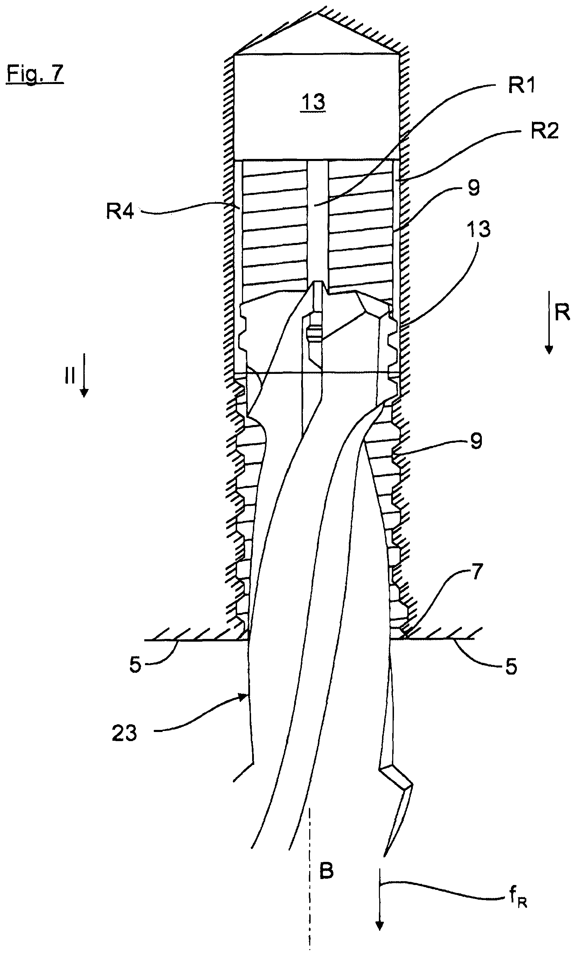

Unmittelbar anschließend wird erfindungsgemäß ein Nutformschritt (Figur 7) durchgeführt, bei dem der Gewindebohr-Hub G in der Gewindebohr-Richtung I um einen Nutform-Hub N verlängert wird. Im Unterschied zum Gewindeform-Hub G sind im Nutform-Hub H der Nutform-Vorschub f_{N} und die Nutform-Drehzahl n_{N} des Gewindebohr-Werkzeugs 23 nicht zueinander synchronisiert sowie unterschiedlich zum vorangegangenen Gewindebohr-Vorschub f_{G} und zur Gewindebohr-Drehzahl n_{G}.

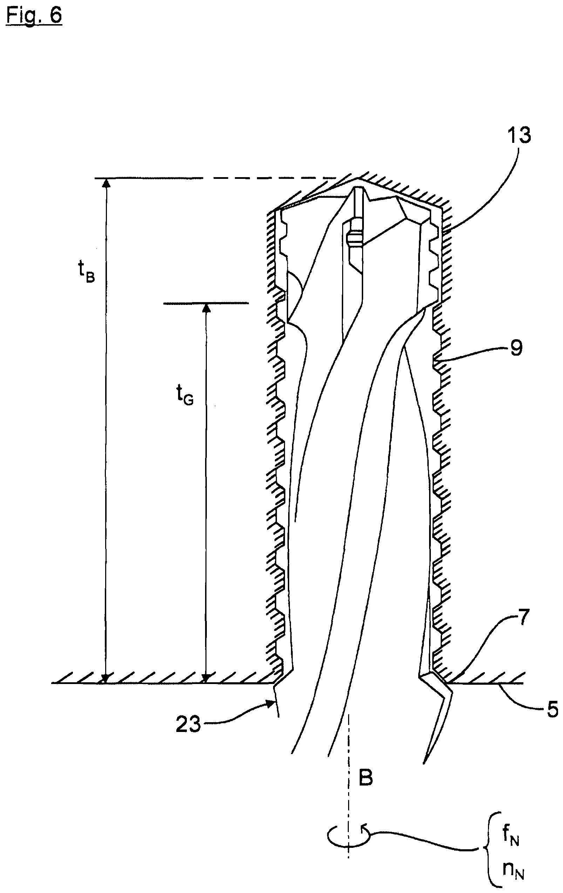

Auf diese Weise erzeugt das Gewindeprofil 29 (im Nutformschritt) mit seinen Vor-, Mittel- und Fertigschneidzähnen 41, 42, 43, 44 sowie mit seinen Räumschneiden 46, 48, 50, 52 die in der Figur 6 und 7 gezeigte Umlaufnut 13, in der das Gewindeprofil 29 belastungsfrei drehen kann. Der Nutform-Vorschub f_{N} sowie die Nutform-Drehzahl n_{N} sind so ausgelegt, dass eine übermäßig große Schneidenbelastung der Schneidzähne 41 bis 44 sowie der Räumschneiden 46, 48, 50, 52 verhindert ist.

Bei Erreichen der Soll-Bohrungstiefe t_{B} wird sowohl der Nutform-Vorschub f_{N} als auch die Nutform-Drehzahl n_{N} auf 0 reduziert. Anschließend erfolgt zur Vorbereitung eines Reversier-Hubes R (Figur 7) eine Vorschubumkehr. Im Reversier-Hub R (Figur 7) wird das Gewindebohr-Werkzeug 23 in einer Reversier-Richtung II (Figur 7) aus der Gewindebohrung 1 herausgeführt, und zwar mit einem entgegengesetzten Reversier-Vorschub f_{R} sowie mit einer Drehzahl von 0. Dadurch werden mittels der Räumschneiden 46, 48, 50, 52 die Räumnuten R1 bis R4 im Innengewinde 9 erzeugt, durch die die Gewinde-Schneidzähne 41, 42, 43, 44 belastungsfrei aus der Gewindebohrung 1 herausgeführt werden.

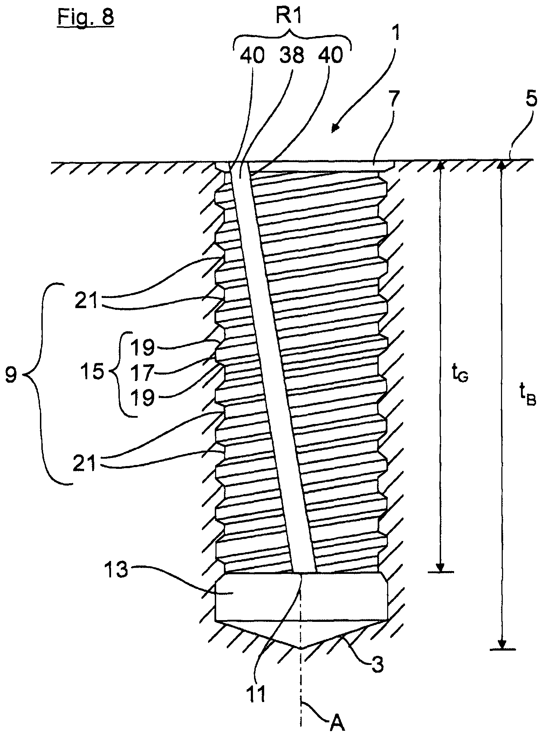

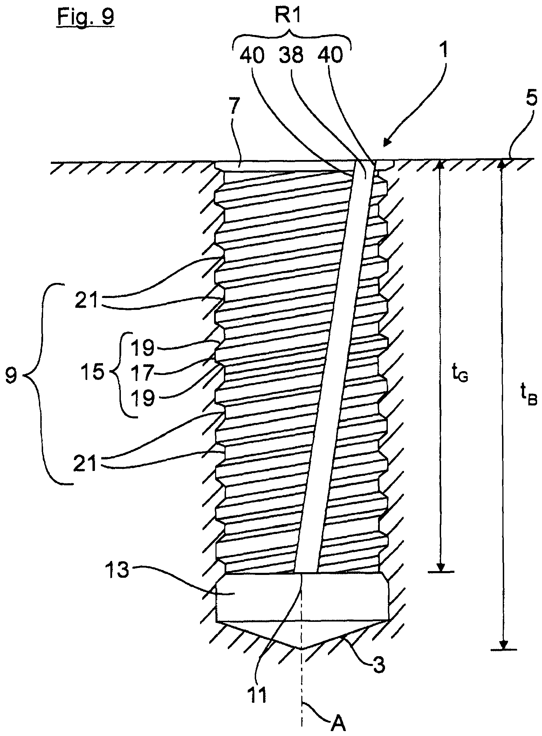

In der oben beschriebenen Prozessabfolge liegt die Reversier-Drehzahl n_{R} des Gewindebohr-Werkzeugs 23 während des Reversier-Hubs H (Fig. 7) bei 0, so dass die Räumnuten R1 bis R4 geradlinig in Axialrichtung verlaufen. Alternativ dazu kann der Reversier-Hub H auch helikal, d.h. mit einer Reversier-Drehzahl n_{R} größer als 0, erfolgen, wie es in den Figuren 8 und 9 veranschaulicht ist: In der Figur 8 ist die Gewindebohr-Drehzahl n_{G} (im Gewindebohr-Hub G) auf die niedrigere Reversier-Drehzahl n_{R} (im Reversier-Hub R) reduziert, und zwar ohne Drehrichtungsumkehr.

In der Figur 9 ist dagegen die Gewindebohr-Drehzahl n_{G} bis auf 0 reduziert worden und wird der Reversier-Hub R mit einer Drehrichtungsumkehr eingeleitet. Die Gewindesteigung der in der Figur 9 gezeigten helikalen Räumnut R1 ist daher gegenläufig zur Gewindesteigung des Innengewindes 9 ausgebildet.

## Patentansprüche

1. Verfahren zum Erzeugen einer Gewindebohrung (1) in einem Werkstück (5) mit einem Gewindebohr-Werkzeug (23), das an seiner Bohrerspitze (25) eine Hauptschneide (27) und ein in einer Gewindebohr-Richtung (I) nacheilendes Gewindeprofil (29) mit zumindest einem Gewinde-Schneidzahn (41, 42, 43, 44) aufweist, wobei in einem Gewindebohr-Hub (G) die Hauptschneide (27) eine Kernlochbohrung erzeugt und gleichzeitig das Gewindeprofil (29) ein Innengewinde (9) an der Innenwandung der Kernlochbohrung bildet bis zum Erreichen einer Soll-Gewindetiefe (tc), und zwar bei einem Gewindebohr-Vorschub (f_{G}) in der Gewindebohr-Richtung (I) und einer damit synchronisierten Gewindebohr-Drehzahl (n_{G}) des Gewindebohr-Werkzeugs (23), wobei nach dem Gewindebohr-Hub (G) ein gegenläufiger Reversier-Hub (R) erfolgt, bei dem das Gewindebohr-Werkzeug (23) in einer Reversier-Richtung (II) aus der Gewindebohrung herausgeführt wird, und zwar mit entgegengesetztem Reversier-Vorschub (f_{R}), **dadurch gekennzeichnet, dass** das Gewindeprofil (29) zumindest eine Räumschneide (46, 48, 50, 52) aufweist, und dass bei der Durchführung des Reversier-Hubs (R) mittels der Räumschneide (46, 48, 50, 52) eine Räumnut (R1 bis R4) erzeugt wird, durch die der Gewinde-Schneidzahn (41, 42, 43, 44) belastungsfrei, das heißt ohne Materialabtrag, aus der Gewindebohrung (1) herausgeführt wird, dass zwischen dem Gewindebohr-Hub (G) und dem Reversier-Hub (R) ein Nutformschritt erfolgt, bei dem der Gewindebohr-Hub (G) in der Gewindebohr-Richtung (I) um einen Nutform-Hub (N) verlängert wird, und zwar zur Bildung einer an das Innengewinde (9) anschließenden Umlaufnut (13) ohne Gewindesteigung, in der das Gewindeprofil (29) ohne Vorschub belastungsfrei drehen kann, und dass in dem Nutformschritt das Gewindebohr-Werkzeug (23) über die Soll-Gewindetiefe (t_{G}) hinaus bis zum Erreichen einer Soll-Bohrungstiefe (t_{B}) in der Gewindebohr-Richtung (I) bewegt wird, und zwar mit einem Nutform-Vorschub (f_{N}) und einer Nutform-Drehzahl (n_{N}), die zueinander nicht synchronisiert sind und/oder unterschiedlich zum Gewindebohr-Vorschub (f_{G}) und zur Gewindebohr-Drehzahl (n_{G}) sind.

2. Verfahren nach Anspruch 1, **dadurch gekennzeichnet, dass** bei der Durchführung des Reversier-Hubs (R) die Drehzahl (n_{R}) des Gewindebohr-Werkzeugs (23) 0 ist.

3. Verfahren nach Anspruch 1, **dadurch gekennzeichnet, dass** bei der Durchführung des Reversier-Hubs (R) die Drehzahl (n_{R}) des Gewindebohr-Werkzeugs (23) größer als 0 ist, so dass die Räumnut (R1 bis R4) helikal ausgeführt wird, und dass für die Durchführung des Reversier-Hubs (H) eine Drehrichtungsumkehr erfolgt, so dass die Gewindesteigung der helikalen Räumnut (R1 bis R4) gegenläufig zur Gewindesteigung des Innengewindes (9) ist.

4. Verfahren nach Anspruch 1, 2 oder 3, **dadurch gekennzeichnet, dass** die Räumnut (R1 bis R4) den Gewindegang (15) des Innengewindes (9) quert, und/oder dass der Räumnut-Boden (38) der Räumnut-Schneide (46, 48, 50, 52) radial außerhalb eines radial äußeren Gewindegrunds (17) des Innengewindes (9) liegt.

5. Verfahren nach einem der vorhergehenden Ansprüche, **dadurch gekennzeichnet, dass** das Gewindebohr-Werkzeug (23) mehrere, umfangsverteilte Gewinde-Schneidzähne (41, 42, 43, 44) aufweist, und dass jedem der Gewinde-Schneidzähne (41, 42, 43, 44) zumindest eine Räumschneide (46, 48, 50, 52) zugeordnet ist.

6. Verfahren nach einem der vorhergehenden Ansprüche, **dadurch gekennzeichnet, dass** die Räumschneide (46, 48, 50, 52) so dimensioniert ist, dass sie im Gewindebohr-Hub (G) belastungsfrei durch den mittels des Gewinde-Schneidzahn (41, 42, 43, 44) gebildeten Gewindegang führbar ist.

7. Verfahren nach einem der vorhergehenden Ansprüche, **dadurch gekennzeichnet, dass** im Nutformschritt das Gewindeprofil (29) des Gewindebohr-Werkzeugs (23) vollständig in der Umlaufnut (13) der Gewindebohrung (1) dreht.

8. Verfahren nach einem der vorhergehenden Ansprüche, **dadurch gekennzeichnet, dass** die Umlaufnut (13) während des Nutform-Hubes (N) mittels der Hauptschneide (27) und des Gewinde-Schneidzahns (41, 42, 43, 44) des Gewindeprofils (29) sowie mittels der Räumschneide (46, 48, 50, 52) erzeugt wird.

9. Verfahren nach einem der vorhergehenden Ansprüche, **dadurch gekennzeichnet, dass** das Gewindebohr-Werkzeug (23) mit einer Schneidkante (49) ausgebildet ist, mit der eine umlaufende Gewindesenkung (7) in der Bohrungsöffnung der Bohrung (1) erzeugt wird, und dass bevorzugt die umlaufende Gewindesenkung (7) während des Nutformschrittes erzeugt wird.

10. Verfahren nach einem der vorhergehenden Ansprüche, **dadurch gekennzeichnet, dass** bei Erreichen der Soll-Bohrungstiefe (t_{B}) der Nutform-Vorschub (f_{N}) auf 0 reduziert wird und die Nutform-Drehzahl (n_{N}) auf 0 reduziert wird zur Vorbereitung des Reversier-Hubes (R).

11. Verfahren nach einem der vorhergehenden Ansprüche, **dadurch gekennzeichnet, dass** beim Start des Reversier-Hubs (R) das Gewindebohr-Werkzeug (23) so angesteuert wird, dass der Gewinde-Schneidzahn (41, 42, 43, 44) belastungsfrei, das heißt ohne Materialabtrag, in einen Räumnut-Auslauf (11), der in die Umlaufnut (13) mündet, eingefahren wird.

12. Verfahren nach einem der vorhergehenden Ansprüche, **dadurch gekennzeichnet, dass** während des Gewindebohr-Hubes (G), des Nutform-Hubes (N) und des Reversier-Hubes (R) die Rotationsachse (B) des Gewindebohr-Werkzeugs (23) und die Bohrungs-Längsachse (A) zueinander koaxial ausgerichtet sind.

13. Verfahren nach einem der vorhergehenden Ansprüche, **dadurch gekennzeichnet, dass** das Gewindebohr-Werkzeug als ein Vorbearbeitungswerkzeug eingesetzt wird, und dass die vorbearbeitete Gewindebohrung in einem Nachbearbeitungsschritt mit Hilfe eines Fertigbearbeitungswerkzeugs nachbearbeitet wird, wobei als Fertigbearbeitungswerkzeug ein Gewindeformer, ein Helikalgewindeformer oder ein Axialgewindeformer einsetzbar ist.

14. Verfahren nach einem der Ansprüche 1 bis 12, **dadurch gekennzeichnet, dass** das Gewindebohr-Werkzeug selbst als ein Fertigbearbeitungswerkzeug eingesetzt wird.

15. Gewindebohr-Werkzeug zur Durchführung eines Verfahrens zum Erzeugen einer Gewindebohrung (1) in einem Werkstück (5), mit einem Spannschaft (24) und einem daran anschließenden Gewindebohr-Körper (26), entlang dessen Längsachse (A) sich zumindest eine Spannut (28) bis zu einer stirnseitigen Hauptschneide (27) an der Bohrerspitze (25) erstreckt, an welcher Hauptschneide (27) eine die Spannut (28) begrenzende Spanfläche (31) und eine stirnseitige Freifläche (33) der Bohrerspitze (25) zusammenlaufen, wobei in der Werkzeug-Umfangsrichtung die Spannut (28) durch zumindest einen Bohrersteg (35) begrenzt ist und die Spanfläche (31) der Spannut (28) unter Bildung einer Nebenschneide (36) in eine außenumfangsseitige Rückenfläche (37) des Bohrerstegs (35) übergeht, und wobei die Nebenschneide (36) und die stirnseitige Hauptschneide (27) an einer radial äußeren Haupt-Schneidenecke (39) zusammenlaufen, wobei an der außenumfangseitigen Rückenfläche (37) des Bohrerstegs (35) ein Gewindeprofil (29) mit zumindest einen Gewindeprofil-Schneidzahn (41, 42, 43, 44) ausgebildet ist, wobei der Gewindeprofil-Schneidzahn (41, 42, 43, 44) eine radial äußere Profilgrund-Schneidkante (45) aufweist, die die Haupt-Schneidenecke (39) radial nach außen um eine Schneidzahn-Höhe überragt, und wobei die radial äußere Profilgrund-Schneidkante (45) sich entlang der Bohrer-Längsachse (B) erstreckt, **dadurch gekennzeichnet, dass** das Gewindeprofil (29) zumindest eine Räumschneide (46, 48, 50, 52) aufweist, und dass bei der Durchführung des Reversier-Hubs (H) mittels der Räumschneide (46, 48, 50, 52) eine Räumnut (R1 bis R4) erzeugbar ist, durch die der Gewinde-Schneidzahn (41, 42, 43, 44) belastungsfrei aus der Gewindebohrung (1) herausführbar ist, dass die Gewindeprofil-Räumschneide (46, 48, 50, 52) eine radial äußere Nutboden-Schneidkante (54) aufweist, die die Haupt-Schneidenecke (39) radial nach außen um eine Räumschneiden-Höhe überragt, und dass die Nutboden-Schneidkante (54) in seitliche Nutflanken-Schneidkanten (56) übergeht.

16. Gewindebohr-Werkzeug nach Anspruch 15, **dadurch gekennzeichnet, dass**, in der Bohrer-Längsachse (B) betrachtet, die Außenkontur der Gewindeprofil-Räumschneide (46, 48, 50, 52) die Außenkontur des Gewindeprofil-Schneidzahns (41, 42, 43, 44) vollständig überdeckt.

## Claims

1. Method for the machining of a threaded hole (1) in a workpiece (5) with a threaded bore tool (23) which has on its drill tip (25) a main cutting edge (27) and a threaded profile (29) pursuing in a threaded bore direction (I) having at least one threaded cutting tooth (41, 42, 43, 44), wherein in a threaded bore stroke (G) the main cutting edge (27) machines a core drill hole and simultaneously the threaded profile (29) forms an inner threading (9) on the inner wall of the core drill hole until it reaches a target threading depth (t_{G}), specifically with a threaded bore feed (f_{G}) in the threaded bore direction (I) and a threaded bore rotational speed (n_{G}), synchronised therewith, of the threaded bore tool (23), wherein after the threaded bore (G) there takes place a reverse (R) in the opposite direction, in which the threaded bore tool (23) is guided in a reverse direction (II) out of the threaded bore, specifically with a reverse feed (f_{R}) in the opposite direction, **characterised in that** the threaded profile (29) has at least one broach cutting edge (46, 48, 50, 52) and that when the reverse stroke (R) is carried out a broach groove (R1 to R4) is produced by means of the broach cutting edge (46, 48, 50, 52), through which the threaded cutting tooth (41, 42, 43, 44) is guided out of the threaded bore (1) in a load-free manner, i.e. without removing material, that between the threaded bore stroke (G) and the reverse stroke (R) is carried out a groove forming step in which the threaded bore stroke (G) is extended in the threaded bore direction (I) by a groove forming stroke (N), specifically in order to form a circumferential groove (13) abutting on the inner threading (9) without thread pitch, in which the threaded profile (29) can turn without feed in a load-free manner, and that in the groove forming step the threaded bore tool (23) is moved in the threaded bore direction (I) beyond the target threading depth (t_{G}) until it reaches a target bore depth (t_{B}), specifically with a groove forming feed (f_{N}) and a groove forming rotational speed (n_{N}) which are not synchronised with one another and/or are different to the threaded bore feed (f_{G}) and to the threaded bore rotational speed (n_{G}).

2. Method according to claim 1, **characterised in that** when carrying out the reverse stroke (R) the rotational speed (n_{R}) of the threaded bore tool (23) is 0.

3. Method according to claim 1, **characterised in that** when carrying out the reverse stroke (R) the rotational speed (n_{R}) of the threaded bore tool (23) is greater than 0, such that the broach groove (R1 to R4) is executed in a helical fashion, and that for carrying out the reverse stroke (H) a rotational direction reversal is carried out, such that the thread pitch of the helical broach groove (R1 to R4) is antidromic to the thread pitch of the inner threading (9).

4. Method according to claim 1, 2 or 3, **characterised in that** the broach groove (R1 to R4) crosses the thread turn (15) of the inner threading (9), and/or that the broach groove floor (38) of the broach groove cutting edge (46, 48, 50, 52) is situated radially outside a radially outer threading floor (17) of the inner threading (9).

5. Method according to any of the preceding claims, **characterised in that** the threaded bore tool (23) has a plurality of thread cutting teeth (41, 42, 43, 44) distributed across the circumference, and that at least one broach cutting edge (46, 48, 50, 52) is assigned to each of the thread cutting teeth (41, 42, 43, 44).

6. Method according to any of the preceding claims, **characterised in that** the broach cutting edge (46, 48, 50, 52) is dimensioned such that it can be guided in the threaded bore stroke (G) in a load-free manner through the thread formed means of the thread cutting tooth (41, 42, 43, 44).

7. Method according to any of the preceding claims, **characterised in that** in the groove forming step the threaded profile (29) of the threaded bore tool (23) turns completely in the circumferential groove (13) of the threaded bore (1).

8. Method according to any of the preceding claims, **characterised in that** the circumferential groove (13) is generated during the groove forming stroke (N) by means of the main cutting edge (27) and the thread cutting tooth (41, 42, 43, 44) of the threaded profile (29) as well as by means of the broach cutting edge (46, 48, 50, 52).

9. Method according to any of the preceding claims, **characterised in that** the threaded bore tool (23) is formed with a cutting edge (49) with which a circumferential thread countersink (7) is produced in the bore opening of the bore (1), and that preferably the circumferential thread countersink (7) is produced during the groove forming step.

10. Method according to any of the preceding claims, **characterised in that** when the target bore depth (t_{B}) is reached the groove forming feed (f_{N}) is reduced to 0 and the groove forming rotational speed (n_{N}) is reduced to 0 in preparation for the reverse stroke (R).

11. Method according to any of the preceding claims, **characterised in that** at the start of the reverse stroke (R) the threaded bore tool (23) is controlled in such a manner that the thread cutting tooth (41, 42, 43, 44) is introduced in a load-free manner, i.e. without material removal, into a broach groove outlet (11) which opens into the circumferential groove (13).

12. Method according to any of the preceding claims, **characterised in that** during the threaded bore stroke (G), the groove forming stroke (N) and the reverse stroke (R) the rotational axis (B) of the threaded bore tool (23) and the bore longitudinal axis (A) are aligned coaxially to one another.

13. Method according to any of the preceding claims, **characterised in that** the threaded bore tool is used as a pre-machining tool, and the pre-machined threaded bore is post-machined in a post-machining step with the aid of a finish-machining tool, wherein as a finish-machining tool can be used a thread moulder, a helical thread former or an axial thread former.

14. Method according to any of claims 1 to 12, **characterised in that** the threaded bore tool is itself used as a finish-machining tool.

15. Threaded bore tool for carrying out a method for the machining of a threaded bore (1) in a workpiece (5), having a clamping shaft (24) and a threaded bore body (26) connected thereto, along the longitudinal axis (A) of which at least one chip flute (28) extends as far as an end face-sided main cutting edge (27) on the drill tip (25), on which main cutting edge (27) a chip surface (31) delimiting the chip flute (28) and an end face-sided free surface (33) of the drill tip (25) converge, wherein in the tool circumferential direction the chip flute (28) is delimited by at least one drill web (35) and the chip surface (31) of the chip flute (28) transitions on the into an outer circumferential sided back surface (37) of the drill web (35) to form a secondary cutting edge (36), and wherein the secondary cutting edge (36) and the end face-side main cutting edge (27) converge on a radially outer main cutting edge corner (39), wherein on the outer circumferential sided back surface (37) of the drill web (35) is formed a threaded profile (29) having at least one threaded profile cutting tooth (41, 42, 43, 44), wherein the threaded profile cutting tooth (41, 42, 43, 44) has a radially outer profile floor cutting edge (45) which protrudes radially beyond the main cutting corner (39) to the outside by the height of a cutting tooth, and wherein the radially outer profile floor cutting edge (45) extends along the drill longitudinal axis (B), **characterised in that** the threaded profile (29) has at least one broach cutting edge (46, 48, 50, 52), and that when carrying out the reverse stroke (H) by means of the broach cutting edge (46, 48, 50, 52) a broach groove (R1 to R4) can be generated through which the threaded cutting tooth (41, 42, 43, 44) can be guided out in a load-free manner from the threaded bore (1), that the threaded profile broach cutting edge (46, 48, 50, 52) has a radially outer groove floor cutting edge (54) which protrudes beyond the main cutting corner (39) radially to the outside by the height of a broach cutting edge, and that the groove floor cutting edge (54) transitions into lateral groove flank cutting edges (56).

16. Threaded bore tool according to claim 15, **characterised in that**, viewed in the drill longitudinal axis (B), the outer contour of the threaded profile broach cutting edge (46, 48, 50, 52) covers completely the outer contour of the threaded profile cutting tooth (41, 42, 43, 44).

## Revendications

1. Procédé de réalisation d'un trou taraudé (1) dans une pièce (5) avec un outil de taraudage (23) qui présente un tranchant principal (27) et un profil de filetage (29) en retard dans une direction de taraudage (I) sur sa pointe de foret (25) avec au moins une dent de coupe de filetage (41, 42, 43, 44), dans laquelle le tranchant principal (27) génère un avant-trou de taraudage dans une course de taraudage (G) et le profil de filetage (29) forme simultanément un filetage intérieur (9) sur la paroi intérieure de l'avant-trou de taraudage jusqu'à ce qu'une profondeur de filetage cible (t_{G}) soit atteinte, et ce, avec une avance de taraudage (f_{G}) dans la direction de taraudage (I) et une vitesse de taraudage (n_{G}) de l'outil de taraudage (23) synchronisée avec elle, dans laquelle, une course d'inversion opposée (R) se produit après la course de taraudage (G), dans laquelle l'outil de taraudage (23) est guidé hors du trou taraudé dans une direction d'inversion (II), avec une vitesse d'avance inverse opposée (f_{R}), **caractérisé en ce que** le profil de filetage (29) présente au moins un tranchant d'évacuation (46, 48, 50, 52) et **en ce qu'**une rainure d'évacuation (R1 à R4) est réalisée au moyen du tranchant d'évacuation (46, 48, 50, 52) lorsque la course d'inversion (R) est réalisée, à travers laquelle la dent de coupe de filetage (41, 42, 43, 44) est guidée hors du trou taraudé (1) sans contrainte, c'est-à-dire sans enlèvement de matière, **en ce qu'**une étape de formation de rainure se produit entre la course de taraudage (G) et la course d'inversion (R), dans laquelle la course de taraudage (G) est prolongée dans la direction de taraudage (I) autour d'une course de formation de rainure (N), et ce, pour former une rainure circonférentielle (13) se raccordant au filet intérieur (9) sans pas de filetage, dans lequel le profil de filetage (29) peut tourner sans charge sans avance, et que dans **en ce que**, dans l'étape de formation de rainure, l'outil de taraudage (23) est déplacé par la profondeur de filetage nominale (t_{G}) jusqu'à atteindre une profondeur de taraudage nominale (t_{B}) dans la direction de taraudage (I), et ce, avec une avance de formation de rainure (f_{N}) et une vitesse de formation de rainure (n_{N}) qui ne sont pas synchronisées entre elles et/ou qui sont différentes de l'avance de taraudage (f_{G}) et de la vitesse de taraudage (n_{G}).

2. Procédé selon la revendication 1, **caractérisée en ce que,** lorsque la course d'inversion (R) est réalisée, la vitesse (n_{R}) de l'outil de taraudage (23) est de 0.

3. Procédé selon la revendication 1, **caractérisé en ce que,** lorsque la course d'inversion (R) est réalisée, la vitesse de rotation (n_{R}) de l'outil de taraudage (23) est supérieure à 0, de sorte que la rainure d'évacuation (R1 à R4) est hélicoïdale, et **en ce que** le sens de rotation est inversé pour réaliser la course d'inversion (H), de sorte que le pas de filetage de la rainure d'évacuation hélicoïdale (R1 à R4) est opposé au pas de filetage du filet intérieur (9).

4. Procédé selon la revendication 1, 2 ou 3, **caractérisé en ce que** la rainure d'évacuation (R1 à R4) croise le filet (15) du filetage intérieur (9), et/ou **en ce que** le fond de rainure d'évacuation (38) du tranchant de rainure d'évacuation (46, 48, 50, 52) se trouve radialement à l'extérieur d'un fond de filetage (17) radialement extérieur du filet intérieur (9).

5. Procédé selon l'une quelconque des revendications précédentes, **caractérisé en ce que** l'outil de taraudage (23) présente plusieurs dents de coupe de filetage (41, 42, 43, 44) réparties sur la rainure circonférence, et **en ce qu'**au moins un tranchant d'évacuation (46, 48, 50, 52) est associé à chacune des dents de coupe de filetage (41, 42, 43, 44).

6. Procédé selon l'une quelconque des revendications précédentes, **caractérisé en ce que** le tranchant d'évacuation (46, 48, 50, 52) est dimensionné de sorte qu'il peut être guidé sans charge dans la course de taraudage (G) à travers le filet formé au moyen de la dent de coupe de filetage (41, 42, 43, 44).

7. Procédé selon l'une quelconque des revendications précédentes, **caractérisé en ce que,** dans l'étape de formation de rainure, le profil de filetage (29) de l'outil de taraudage (23) tourne entièrement dans la rainure circonférentielle (13) du trou taraudé (1).

8. Procédé selon l'une quelconque des revendications précédentes, **caractérisé en ce que** la rainure circonférentielle (13) est réalisée pendant la course de formation de rainure (N) au moyen du tranchant principal (27) et de la dent de coupe de filetage (41, 42, 43, 44) du profil de filetage (29) ainsi qu'au moyen du tranchant d'évacuation (46, 48, 50, 52).

9. Procédé selon l'une quelconque des revendications précédentes, **caractérisé en ce que** l'outil de taraudage (23) est formé avec une arête de coupe (49), avec laquelle un évidement de filetage circonférentiel (7) est réalisé dans l'ouverture du trou taraudé (1), et **en ce que** de préférence l'évidement de filetage circonférentiel (7) est réalisé pendant l'étape de formation de rainure.

10. Procédé selon l'une quelconque des revendications précédentes, **caractérisé en ce que,** lorsque la profondeur de taraudage nominale (t_{B}) est atteinte, l'avance de formation de rainure (f_{N}) est réduite à 0 et la vitesse de formation de rainure (n_{N}) est réduite à 0 en préparation de la course d'inversion (R).

11. Procédé selon l'une quelconque des revendications précédentes, **caractérisé en ce que,** au début de la course d'inversion (R), l'outil de taraudage (23) est commandé de sorte que la dent de coupe de filetage (41, 42, 43, 44) est déplacée sans charge, c'est-à-dire sans enlèvement de matière, dans une sortie de rainure d'évacuation (11), qui débouche dans la rainure circonférentielle (13).

12. Procédé selon l'une quelconque des revendications précédentes, **caractérisé en ce que,** pendant la course de taraudage (G), la course de formation de rainure (N) et la course d'inversion (R), l'axe de rotation (B) de l'outil de taraudage (23) et l'axe longitudinal de trou taraudé (A) sont alignés coaxialement l'un par rapport à l'autre.

13. Procédé selon l'une quelconque des revendications précédentes, **caractérisé en ce que** l'outil de taraudage est utilisé comme outil de préusinage, et **en ce que** le trou taraudé préusiné est réusiné dans une étape de réusinage à l'aide d'un outil de finition, dans lequel un taraud, un taraud hélicoïdal ou un taraud axial peut être utilisé comme outil de finition.

14. Procédé selon l'une quelconque des revendications 1 à 12, **caractérisé en ce que** l'outil de taraudage même est utilisé comme outil de finition.

15. Outil de taraudage pour mettre en œuvre un procédé de réalisation d'un trou taraudé (1) dans une pièce (5), avec une tige de serrage (24) et un corps de taraudage (26) qui s'y raccorde, le long de l'axe longitudinal (A) duquel s'étend au moins une goujure (28) jusqu'à un tranchant principal frontal (27) sur la pointe de foret (25), sur lequel tranchant principal (27) convergent une surface de coupe (31) délimitant la goujure (28) et une surface libre frontale (33) de la pointe de foret (25), dans laquelle la goujure (28) est délimitée dans la direction circonférentielle de l'outil par au moins une âme de foret (35) et la surface de coupe (31) de la goujure (28) passe dans une surface arrière circonférentielle extérieure (37) de l'âme de foret (35) par formation d'un tranchant secondaire (36), et dans lequel le tranchant secondaire (36) et le tranchant principal frontal (27) convergent vers un coin de tranchant principal (39) radialement extérieur, dans lequel un profil de filetage (29) avec au moins une dent de coupe de profil de filetage (41, 42, 43, 44) est prévu sur la surface arrière circonférentielle extérieure (37) de l'âme de foret (35), dans lequel la dent de coupe de profil de filetage (41, 42, 43, 44) présente une arête de coupe de fond de profil radialement extérieure (45) qui dépasse radialement vers l'extérieur du coin de tranchant principal (39) d'une hauteur de dent de coupe, et dans lequel l'arête de coupe de fond de profil radialement extérieure (45) s'étend le long de l'axe longitudinal de foret (B), **caractérisé en ce que** le profil de filetage (29) présente au moins un tranchant d'évacuation (46, 48, 50, 52), et **en ce qu'**une rainure d'évacuation (R1 à R4) peut être réalisée lorsque la course d'inversion (H) est réalisée au moyen du tranchant d'évacuation (46, 48, 50, 52), par laquelle rainure d'évacuation la dent de coupe de filetage (41, 42, 43, 44) peut être guidée sans charge hors du trou taraudé (1), **en ce que** le tranchant d'évacuation de profil de filetage (46, 48, 50, 52) présente une arête de coupe de fond de rainure (54) radialement extérieure qui dépasse radialement vers l'extérieur du coin de tranchant principal (39) d'une hauteur de tranchant d'évacuation, et **en ce que** l'arête de coupe de fond de rainure (54) passe dans les arêtes de coupe latérales de flancs de rainure (56).

16. Outil de taraudage selon la revendication 15, **caractérisé en ce que,** vu dans l'axe longitudinal de foret (B), le contour extérieur du tranchant d'évacuation de profil de filetage (46, 48, 50, 52) recouvre complètement le contour extérieur de la dent de coupe de profil de filetage (41, 42, 43, 44).
